# EUROPÄISCHE PATENTSCHRIFT

(11) **EP 1 190 966 B1**
(45) Veröffentlichungstag und Bekanntmachung des Hinweises auf die Patenterteilung: **14.12.2005**
(21) Anmeldenummer: 01110919.6
(22) Anmeldetag: 05.05.2001
(51) Int. Cl.: B65G 15/02, B65G 23/12

(54) **Fördervorrichtung**
Conveyor device
Dispositif de transport

(30) Priorität: 22.09.2000 DE 20016446 U
(43) Veröffentlichungstag der Anmeldung: 27.03.2002
(73) Patentinhaber: Max Dörr GmbH, 75050 Gemmingen (DE)
(72) Erfinder: Dörr, Thomas, 74889 Sinsheim (DE)
(74) Vertreter: Reimold, Otto

(56) Entgegenhaltungen:
- DE-A- 3 734 560
- US-A- 5 332 083
- US-A- 6 053 306
- PATENT ABSTRACTS OF JAPAN vol. 017, no. 304 (M-1427), 10. Juni 1993 (1993-06-10) & JP 05 024622 A (NITTA IND CORP), 2. Februar 1993 (1993-02-02)

## Beschreibung

Die Erfindung betrifft eine Fördervorrichtung mit einem endlos umlaufenden, ein oberes Vorlauftrum und ein unteres Rücklauftrum bildenden Förderband, einer das Förderband antreibenden Antriebseinrichtung und einer das Förderband randseitig führenden Führungseinrichtung, die an einem sich dem betreffenden Förderbandrand entlang erstreckenden Teil des Vorrichtungsgestells angeordnete, in Förderband-Längsrichtung aufeinanderfolgende Niederhalterollen aufweist, die das Förderband gegen eine zwischen den beiden Bandtrumen angeordnete Gegenhalteeinrichtung halten.

Fördervorrichtungen mit einer den jeweiligen Randbereich des Förderbandes führenden Führungseinrichtung sind üblich. Will man bei den bekannten Fördervorrichtungen das Förderband auswechseln, beispielsweise wenn es beschädigt ist und durch ein neues Förderband ersetzt werden soll, müssen verhältnismäßig umständliche Montagearbeiten durchgeführt werden, damit das Förderband von der Führungseinrichtung frei kommt und weggenommen werden kann.

Ausgehend hiervon liegt der vorliegenden Erfindung die Aufgabe zugrunde, eine Fördervorrichtung der eingangs genannten Art so auszubilden, dass das Auswechseln des Förderbandes vereinfacht wird.

Diese Aufgabe wird erfindungsgemäß dadurch gelöst, dass die Niederhalterollen in ihrer Gebrauchslage durch die Kraft einer Federeinrichtung gegen das Förderband gehalten werden und entgegen der Federkraft in eine vom Förderband abgehobene Montagelage verstellbar sind.

Verstellt man die Niederhalterollen in ihre Montagelage, wird das Förderband von der Führungseinrichtung nicht mehr festgehalten, so dass es ohne Schwierigkeiten entfernt werden kann. Dieses Abheben der Niederhalterollen vom Förderband kann ohne besondere Werkzeuge von Hand erfolgen, was den Bandwechsel weiter vereinfacht.

In diesem Zusammenhang ist bei einer bevorzugten Ausführungsform vorgesehen, dass die Niederhalterollen bei ihrem Verstellen zwischen der Gebrauchslage und der Montagelage eine Totpunktlage durchlaufen, so dass die Federkraft die jeweilige Niederhalterolle sowohl in der Gebrauchslage als auch in der Montagelage hält.

Zweckmäßigerweise wird die Gegenhalteeinrichtung von Gegenhalterollen gebildet, die jeweils zwischen einer dem Vorlauftrum zugeordneten Niederhalterolle und einer dem Rücklauftrum zugeordneten Niederhalterolle angeordnetsind. Dabei ist bevorzugt vorgesehen, dass das Förderband an seiner dem Zwischenraum zwischen den beiden Trumen zugeordneten Innenseite eine dem den Gegenhalterollen zugewandten Förderbandrand entlang durchgehend verlaufende Führungsleiste aufweist, deren dem Förderbandrand abgewandte Leistenseite eine im Querschnitt gesehen keilartig schräge Leisten-Führungsfläche bildet, und dass die Gegenhalterollen eine umlaufende, die Leisten-Führungsfläche übergreifende und an dieser anliegende Rollen-Führungsfläche aufweisen.

Eine solche Führungseinrichtung ist insbesondere für gebogen verlaufende Förderbänder vorteilhaft, bei denen der radial außen angeordnete Förderbandrand nach radial außen gehalten werden muss, damit sich das Förderband nicht selbsttätig nach radial innen bewegen kann. In einem solchen Falle hintergreifen die Gegenhalterollen, von radial außen gesehen, die dem äußeren Förderbandrand entlang verlaufende Führungsleiste, so dass sich diese und somit das Förderband an den Gegenhalterollen in radialer Richtung abstützt.

Überführt man die Niederhalterollen in ihre Montagelage, kann die Führungsleiste ohne Schwierigkeiten über die die Rollen-Führungsfläche bildende Partie der Gegenhalterollen gehoben werden.

Bei einer Fördervorrichtung, bei der die Antriebseinrichtung eine zwischen die beiden Bandtrume greifende Antriebswalze und eine an der der Antriebswalze entgegengesetzten Außenseite des Rücklauftrums angeordnete, das Rücklauftrum gegen die Antriebswalze haltende Gegenwalze aufweist, wobei die Gegenwalze an einer die Außenseite des Rücklauftrums übergreifenden Trageinrichtung angeordnet ist, ist es des weiteren vorteilhaft, dass die Trageinrichtung vom Rücklauftrum weg schwenkbar mit dem Vorrichtungsgestell verbunden ist. Beim Bandwechsel wird die Trageinrichtung vom Rücklauftrum weg geschwenkt, so dass sie nicht mehr im Wege ist.

Weitere zweckmäßige Maßnahmen sind in den Unteransprüchen angegeben.

Ein Ausführungsbeispiel der Erfindung wird nun anhand der Zeichnung erläutert. Es zeigen:
- Fig. 1: eine gebogen verlaufende Fördervorrichtung in stark schematisierter Darstellung in Draufsicht von oben, wobei von der Führungseinrichtung nur die auf dem Vorlauftrum abrollenden Niederhalterollen ohne die zugehörigen Elemente zum Verstellen in die Montagelage angedeutet sind,
- Fig. 2: die Fördervorrichtung nach Fig. 1 im beispielsweise der Schnittlinie II-II entsprechenden Querschnitt, wobei nur der radial außen liegende Bereich und dabei vom Vorrichtungsgestell nur ein als Träger für die Führungseinrichtung und die Antriebseinrichtung dienendes Gestellteil gezeigt ist,
- Fig. 3: die Anordnung nach Fig. 2 in einer dem Pfeil III entsprechenden Ansicht von radial innen her gesehen, wobei sich die Niederhalterollen in ihrer Gebrauchslage befinden,
- Fig. 4: die Anordnung nach Fig. 3, wobei die Niederhalterollen in ihre Montagelage verstellt sind, und

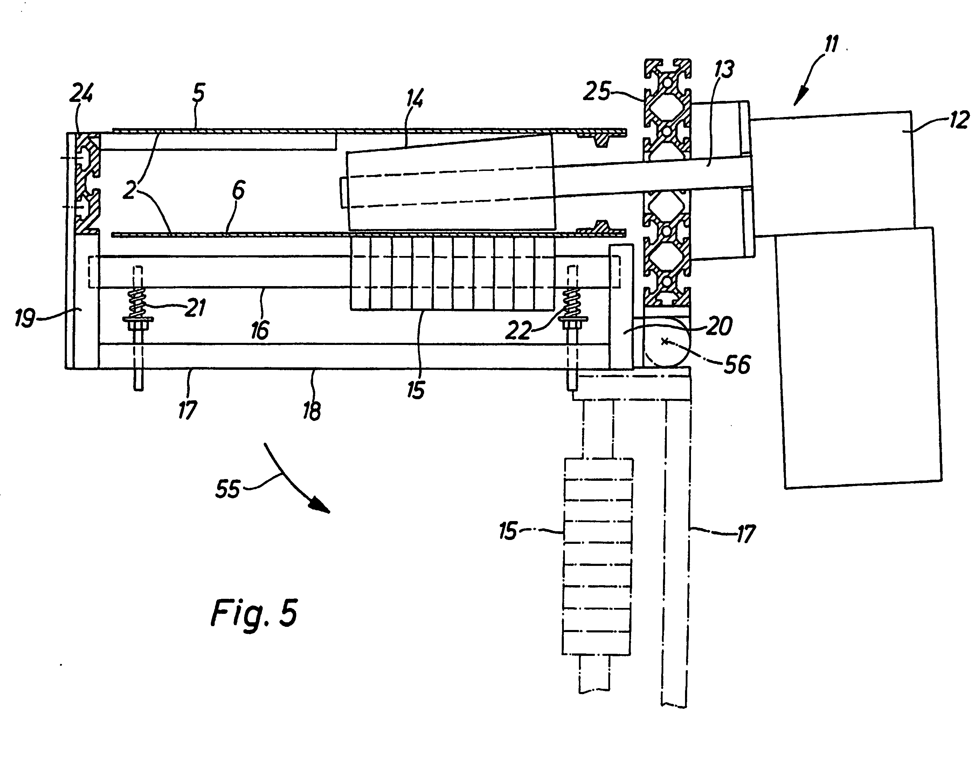

- Fig. 5: die Fördervorrichtung nach Fig. 1 im neben der Antriebseinrichtung gelegten Querschnitt, wobei die der Gegenwalze zugeordnete Trageinrichtung mit ausgezogenen Linien in ihrer Gebrauchslage und mit strichpunktierten Linien in ihrer vom Rücklauftrum weggeschwenkten Montagelage dargestellt ist.

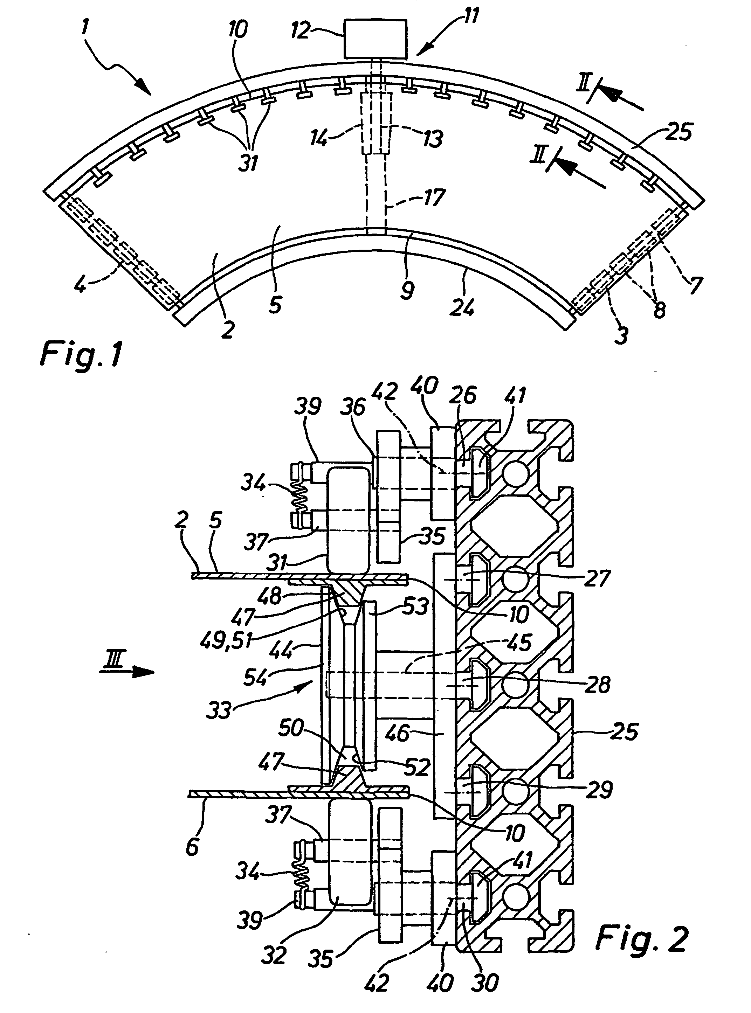

Eine Fördervorrichtung 1 weist ein endlos umlaufendes Förderband 2 auf, das um zwei an den einander entgegengesetzten Enden der Fördervorrichtung angeordnete Umlenkwalzen 3,4 umläuft, so dass sich ein oberes Vorlauftrum 5 und ein unteres Rücklauftrum 6 ergibt. Die beiden Umlenkwalzen 3,4 weisen jeweils eine über die Förderbandbreite durchgehende Walzenachse 7 auf, die drehfest am Gestell der Fördervorrichtung 1 gelagert ist. Auf der Walzenachse 7 sind mehrere Einzelwalzen 8 hintereinander angeordnet, die jeweils für sich drehbar sind. Die Aufteilung in die Einzelwalzen 8 hängt damit zusammen, dass das Förderband 2 gebogen verläuft, wie aus Fig. 1 hervorgeht. Im dargestellten Falle handelt es sich um einen Kreisbogen mit 90°. Die Winkelerstreckung kann jedoch auch anders sein. Aufgrund des gebogenen Verlaufs ergeben sich an dem radial inneren Längsrand 9 und dem radial äußeren Längsrand 10 des Förderbandes 2 unterschiedliche Bandgeschwindigkeiten.

Das Förderband 2 ist motorisch zu seiner Umlaufbewegung antreibbar. Hierzu ist eine Antriebseinrichtung 11 mit einer außen am Vorrichtungsgestell angeordneten Motor- und Getriebeeinheit 12 vorhanden, auf deren Antriebswelle 13 eine zwischen die beiden Bandtrume 5,6 greifende Antriebswalze 14 sitzt, die aufgrund des gebogenen Verlaufs des Förderbandes 2 eine kegelige Gestalt aufweist. Die Antriebswelle 13 und somit die Antriebswalze 14 ist mit Bezug auf die Förderbandebene geneigt angeordnet, so dass die Antriebswalze 14 über ihre Länge hinweg an der dem Vorlauftrum 5 zugewandten Innenseite des Rücklauftrums 6 anliegt.

Zur Antriebseinrichtung 11 gehört ferner eine an der der Antriebswalze 14 entgegengesetzten Außenseite des Rücklauftrums 6 angeordnete, das Rücklauftrum 6 gegen die Antriebswalze 14 haltende Gegenwalze 15, die im Falle eines gebogen verlaufenden Förderbandes 2 wie die Umlenkwalze 3,4 in hintereinander angeordnete Einzelwalzen unterteilt ist. Die Gegenwalze 15 bzw. deren Einzelwalzen sind frei drehbar auf einem Achskörper 16 gelagert, der an einer die Außenseite des Rücklauftrums übergreifenden und somit dem Rücklauftrum 6 nach unten hin vorgelagerten Trageinrichtung 17 angeordnet ist. Im dargestellten Falle weist die Trageinrichtung 17 eine U-artige Gestalt mit einem sich im wesentlichen über die Breite des Förderbandes 2 erstreckenden Stegbereich 18 und zwei an den Enden des Stegbereichs 18 zum Förderband hin hochstehenden Schenkeln 19,20 auf, wobei der Achskörper 16 zwischen den beiden Schenkeln 19,20 verläuft und an diesen gelagert ist. Der Achskörper 16 und somit die Gegenwalze 15 wird durch Federanordnungen 21, 22 zum Rücklauftrum 6 hin beaufschlagt. Dabei ist die Federkraft einstellbar.

Damit das Förderband 2 beim Betrieb seinen Verlauf beibehält, muss es randseitig geführt und gehalten werden. Dies wird mittels einer geeigneten Führungseinrichtung 23 erreicht. Handelt es sich wie beim Ausführungsbeispiel um ein gebogen verlaufendes Förderband 2, genügt es, die nachstehend beschriebene Führungseinrichtung 23 nur am radial außen angeordneten Förderbandrand 10 vorzusehen, da das Förderband 2 hier in radialer Richtung gegen ein Bewegen nach radial innen hin gesichert werden muss.

Die Führungseinrichtung 23, die Antriebseinrichtung 11, die Trageinrichtung 17 und die Umlenkwalzen 3,4 werden von einem Vorrichtungsgestell gehalten, von dem nur die beiden den einander entgegengesetzten Längsrändern 9,10 des Förderbandes 2 benachbarten und diesen entlang verlaufenden, trägerartigen Gestellteile 24,25 dargestellt sind. Die Gestellteile 24,25 werden beim Ausführungsbeispiel von Längsprofilteilen gebildet, die übereinander angeordnete, in Längsrichtung verlaufende, hinterschnittene Längsnuten aufweisen, so dass sich an der dem Förderband zugewandten Gestellteilseite an den Längsnuten 26,27,28,29,30 die genannten Einrichtungen und die Umlenkwalzen befestigen lassen.

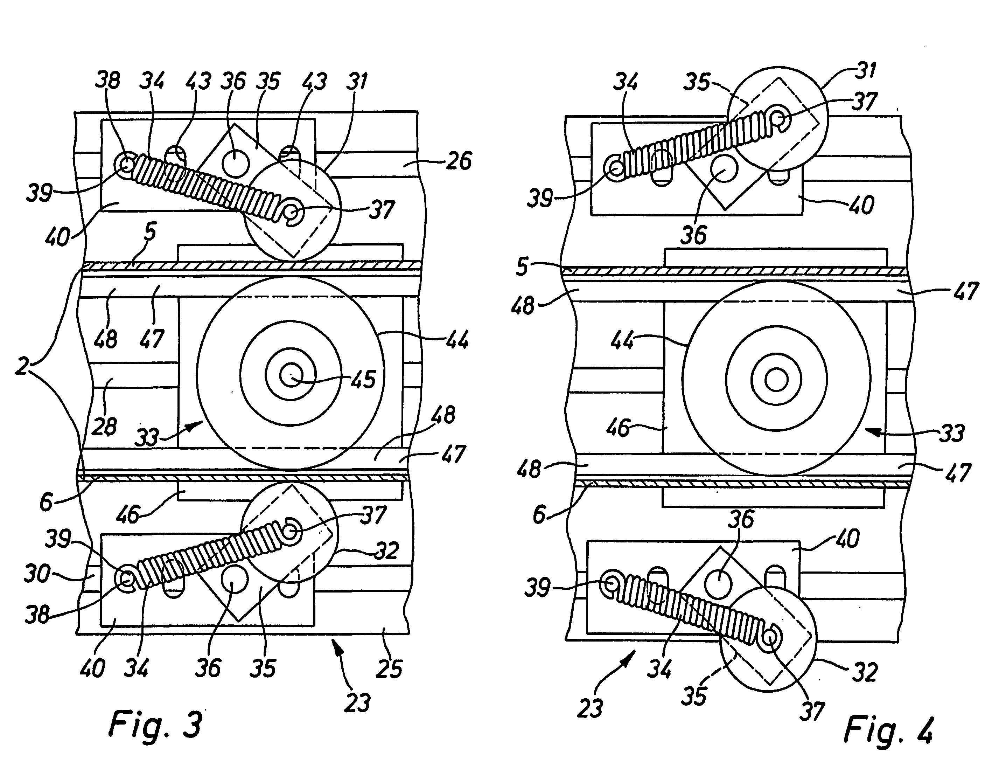

Die Führungseinrichtung 23 weist in Förderband-Längsrichtung aufeinanderfolgende Niederhalterollen 31,32 auf, die an dem sich dem betreffenden Förderbandrand 10 entlang erstreckenden Gestellteil 25 angeordnet sind. Dabei sind die Niederhalterollen 31 dem Vorlauftrum 5 und die Niederhalterollen 32 dem Rücklauftrum 6 zugeordnet. Die Niederhalterollen 31,32 sind frei drehbar gelagert und liegen in ihrer Gebrauchslage (Fig. 2 und 3) an der Außenseite des betreffenden Bandtrums 5 bzw. 6 an. Dabei liegt jeder dem Vorlauftrum 5 zugeordneten Niederhalterolle 31 eine dem Rücklauftrum 6 zugeordnete Niederhalterolle 32 gegenüber, so dass sich jeweils von einer oberen Niederhalterolle 31 und einer unteren Niederhalterolle 32 gebildete, in Förderband-Längsrichtung aufeinander folgende Rollenpaare ergeben, von denen eines in den Fig. 2,3 und 4 dargestellt ist. An der Stelle jedes Niederhalte-Rollenpaares 31,32 ist zwischen den beiden Bandtrumen 5,6 eine Gegenhalteeinrichtung 33 angeordnet, gegen die die Bandtrume 5,6 durch die Niederhalterollen 31,32 gehalten werden, so dass ein sicherer Bandlauf gewährleistet ist.

Die Niederhalterollen 31,32 werden in ihrer Gebrauchslage durch die Kraft einer Federeinrichtung 34 gegen das Förderband 2 gehalten. Zum Anbringen oder Wegnehmen des Förderbandes 2 werden die Niederhalterollen 31,32 entgegen der Federkraft vom Förderband 2 abgehoben, so dass sie in die aus Fig. 4 hervorgehende Montagelage verstellt werden, in der sie das Förderband 2 frei geben.

Beim dargestellten Ausführungsbeispiel sind die Niederhalterollen 31,32 jeweils für sich aus der Gebrauchslage in die Montagelage verstellbar. Dies könnte prinzipiell auch anders sein, da man mehrere Niederhalterollen bewegungsgekoppelt anordnen könnte.

Die Niederhalterollen 31,32 durchlaufen bei ihrem Verstellen zwischen der Gebrauchslage und der Montagelage eine dazwischen liegende Totpunktlage, so dass die Kraft der Federeinrichtung 34 die jeweilige Niederhalterolle 31,32 sowohl in der Gebrauchslage (Fig. 2 und 3) als auch in der Montagelage (Fig. 4) hält. Das Verstellen der in dieser Weise angeordneten Niederhalterollen 31,32 kann von Hand erfolgen, so dass keine Werkzeuge erforderlich sind. Beim Verstellen muss lediglich bis zur Totpunktlage die Federkraft überwunden werden. Anschließend unterstützt bzw. bewirkt die Federkraft das weitere Überführen der Niederhalterolle in die betreffende Lage.

Wie aus der Zeichnung ferner hervorgeht, sind die Niederhalterollen 31,32 jeweils an einem Schwenkarm 35 verdrehbar gelagert, der an einer mit dem Gestellteil 25 verbundenen Schwenkachse 36 angeordnet ist, so dass der Schwenkarm 35 um die ortsfeste Schwenkachse 36 schwenkbar ist. Je nach der Lagerung der Schwenkachse 36 könnte sich diese beim Verschwenken des Schwenkarms 35 auch mitdrehen. Die der jeweiligen Niederhalterolle 31,32 zugeordnete Rollenachse 37 ist am Schwenkarm 35 mit Abstand zur Schwenkachse 36 angeordnet.

Die Federeinrichtung 34 stützt sich einerseits gestellseitig und andererseits am Schwenkarm 35 ab. Dabei weist die Federeinrichtung 34 beim Ausführungsbeispiel Längsgestalt auf und ist gestellseitig abseits der Schwenkachse 36 an einer Befestigungsstelle 38 festgelegt. Zweckmäßigerweise wird die Federeinrichtung 34 von einer Zugfeder, insbesondere in Gestalt einer Schraubenfeder, gebildet. In Zusammenhang hiermit handelt es sich bei der Befestigungsstelle 38 um einen ortsfest mit dem Vorrichtungsgestell verbundenen und zum Förderband hin abstehenden Einhängebolzen 39, an dem die Schraubenfeder 34 eingehängt ist.

Die Federeinrichtung 34 ist andernends an der die jeweilige Niederhalterolle 31,32 drehbar am Schwenkarm 35 lagernden Rollenachse 37 festgelegt. Hierzu steht die Rollenachse 37 über die Niederhalterolle 31,32 vor, so dass die Schraubenfeder 34 an dem überstehenden Rollenachsen-Endbereich eingehängt werden kann.

Es versteht sich, dass die Federeinrichtung 34 am Schwenkarm 35 prinzipiell auch an einer anderen Stelle angreifen könnte.

Wie aus der Zeichnung ferner ersichtlich ist, greift die Zugfeder 34 von ihrem gestellseitig festgelegten Ende (Befestigungsstelle 38) her gesehen jenseits der Schwenkachse 36 am Schwenkarm 35 an. Dabei kann die Anordnung so getroffen sein, dass die Niederhalterolle 31,32 in ihrer Gebrauchslage einerseits und in ihrer Montagelage andererseits der verlängerten Verbindungslinie zwischen der gestellseitigen Befestigungsstelle 38 der Federeinrichtung 34 und der Schwenkachse 36 angeordnet ist.

Beim Überführen der Niederhalterolle 31,32 aus der Gebrauchslage in die Montagelage schwenkt die Niederhalterolle 31,32 um die Schwenkachse 36 und die Federeinrichtung 34 um die gestellseitige Befestigungsstelle 38, wobei die Federeinrichtung 34 gleichzeitig ihre Länge verändert. Gelangt die Rollenachse 37 beim Verschwenken des Schwenkarms 35 zur verlängerten Verbindungslinie zwischen der gestellseitigen Befestigungsstelle 38 und der Schwenkachse 36, ist die Totpunktlage erreicht, in der die Zugfeder 34 am weitesten gespannt ist.

Die Schwenkachse 36 und die Befestigungsstelle 38 der Federeinrichtung 34, die beide gestellseitig ortsfest angeordnet sind, liegen beim Ausführungsbeispiel auf einer parallel zum Förderband verlaufenden Linie mit Abstand hintereinander.

Der Schwenkarm 35 mit zugeordneter Niederhalterolle 31 bzw. 32 sowie die Federeinrichtung 34 sind im dargestellten Falle an einem Befestigungsteil 40 angeordnet, das an dem Gestellteil 25 des Vorrichtungsgestells befestigt ist. Das dargestellte Befestigungsteil 40 weist eine plattenförmige Gestalt auf. Bei dem Befestigungsteil 40 mit dem Schwenkarm 35, der Niederhalterolle 31 bzw. 32 und der Federeinrichtung 34 handelt es sich um eine Montageeinheit, die über das Befestigungsteil 40 am Gestellteil 25 festgelegt wird. Dieses Befestigen erfolgt beim Ausführungsbeispiel an der zugewandten Längsnut 26 bzw. 30. Dabei dienen zur Befestigung in die hinterschnittenen Längsnuten eingesetzte Nutensteine 41, die in Gewindeeingriff mit das Befestigungsteil 40 gegen das Gestellteil 25 spannenden Befestigungsschrauben 42 stehen. Die Befestigungsschrauben 42 sind in Fig. 2 nur strichpunktiert angedeutet und in den Fig. 3 und 4 der Übersichtlichkeit wegen weggelassen worden, so dass in den Fig. 3 und 4 die den Befestigungsschrauben zugeordneten Durchtrittsöffnungen 43 sichtbar sind.

Auf diese Weise ist das jeweilige Befestigungsteil 40 und somit die zugehörige Niederhalterolle 31 bzw. 32 in Förderband-Längsrichtung verstellbar am Gestellteil 25 festlegbar.

Die Gegenhalteeinrichtung 33 wird von Gegenhalterollen 44 gebildet, wobei jedem Paar von Niederhalterollen 31,32 eine Gegenhalterolle 44 zugeordnet ist, die sich zwischen der dem Vorlauftrum zugeordneten Niederhalterolle 31 und der dem Rücklauftrum 6 zugeordneten Niederhalterolle 6 befindet. Die Gegenhalterollen 44 sind frei drehbar mit dem Vorrichtungsgestell verbunden und sitzen hierzu an einer Lagerachse 45, die von einem zweckmäßigerweise plattenförmigen Halteteil 46 absteht, das in entsprechender Weise wie die Befestigungsteile 40 am Gestellteil 25 mittels Nutensteinen und Befestigungsschrauben an den Längsnuten 27,28,29 in Förderband-Längsrichtung verstellbar fixiert sein kann.

Das Förderband 2 weist an seiner dem Zwischenraum zwischen den beiden Trumen 5,6 zugeordneten Innenseite eine Führungsleiste 47 auf, die sich dem betreffenden Förderbandrand 10 entlang durchgehend erstreckt. Die Führungsleiste 47 ist in einer der üblichen Weisen fest mit dem das Förderband 2 bildenden Material verbunden. Die dem Förderbandrand 10 abgewandte Seite der Führungsleiste 47 bildet eine im Querschnitt gesehen keilartig schräge Leisten-Führungsfläche 48. Dieser Leisten-Führungsfläche 48 ist an der jeweiligen Gegenhalterolle 44 eine umlaufende Rollen-Führungsfläche 49 zugeordnet, die die Leisten-Führungsfläche 48 übergreift und an dieser anliegt, so dass sich das Förderband 2 über die Leisten-Führungsfläche 48 und die Rollen-Führungsflächen 49 an den Gegenhalterollen 44 und somit am Gestellteil 25 abstützt. Auf diese Weise bleibt der Förderband-Längsrand 10 in seiner dem Gestellteil 25 entlang verlaufenden Lage. Würde die von den beiden Führungsflächen 48,49 gebildete radiale Abstützung des äußeren Förderband-Längsrandes 10 fehlen, würde bei einem gebogen verlaufenden Förderband deren äußerer Längsrand 10 sozusagen nach innen rutschen.

Die Rollen-Führungsfläche 49 ist im Querschnitt gesehen im wesentlichen gleich schräg wie die Leisten-Führungsfläche 48.

Die Gegenhalterollen 44 weisen eine Umfangsnut 50 zum Eintauchen der Führungsleiste 47 auf, wobei die dem Förderbandrand 10 abgewandte erste Nutflanke 51 die Rollen-Führungsfläche 48 bildet. Bei einer solchen Führungsnut weisen die Führungsleiste 47 und die Umfangsnut 51 zweckmäßigerweise einen trapezförmigen Querschnitt auf.

Zum Wegnehmen des Förderbandes 2 werden die beiden Bandtrume 5,6 so weit von den Gegenhalterollen 44 abgehoben, dass die Führungsleiste 47 von den Rollen-Führungsflächen 49 freikommt. Da die Niederhalterollen 31,32 hierbei in ihre Montagelage verschwenkt sind, stören sie nicht.

Die dem Förderbandrand 10 zugewandte, die zweite Nutflanke 52 bildende Partie 53 der Gegenhalterollen 44 weist beim Ausführungsbeispiel einen kleineren Außendurchmesser als die die erste Nutflanke 51 bildende Rollenpartie 54 auf.

Die Führungsleiste 44 wird außen von der zweiten Nutflanke 52 übergriffen, wobei es sich allerdings nur um ein kurzes Stück handelt. Dies reicht für eine gute Förderbandführung aus. Prinzipiell könnte die Führungsleiste 47 außen sogar ungeführt sein.

Weiter oben wurde in Zusammenhang mit der Antriebseinichtung 11 auf die die Gegenwalze 15 haltende Trageinrichtung 17 hingewiesen, die das Rücklauftrum 6 unten überquert. In Zusammenhang mit einem möglichst einfach durchzuführenden Förderbandwechsel ist es hier von Vorteil, dass die Trageinrichtung 17 aus ihrer beim Betrieb eingenommenen Gebrauchslage in Richtung gemäß Pfeil 55 vom Rücklauftrum 6 weg in eine strichpunktiert angedeutete Montagelage schwenkbar ist, so dass das Rücklauftrum 6 von der Trageinrichtung 17 und damit von der Gegenwalze 15 freikommt. Die Trageinrichtung 17 ist mit ihrem dem Gestellteil 25, an dem die Antriebseinrichtung 11 und die Führungseinrichtung 23 angeordnet sind, zugewandten Endbereich an diesem Gestellteil 25 angelenkt (Anlenkachse 56), um die das Verschwenken erfolgt. Der entgegengesetzte Endbereich der Trageinrichtung 17, beim Ausführungsbeispiel deren Schenkel 19, ist lösbar mit dem zugewandten Gestellteil 24 verbunden.

## Patentansprüche

1. Fördervorrichtung mit einem endlos umlaufenden, ein oberes Vorlauftrum und ein unteres Rücklauftrum bildenden Förderband, einer das Förderband antreibenden Antriebseinrichtung und einer das Förderband randseitig führenden Führungseinrichtung, die an einem sich dem betreffenden Förderbandrand entlang erstreckenden Teil des Vorrichtungsgestells angeordnete, in Förderband-Längsrichtung aufeinander folgende Niederhalterollen aufweist, die das Förderband gegen eine zwischen den beiden Trumen angeordnete Gegenhalteeinrichtung halten, **dadurch** gekennzeichnen, dass die Niederhalterollen (31,32) in ihrer Gebrauchslage durch die Kraft einer Federeinrichtung (34) gegen das Förderband (2) gehalten werden und entgegen der Federkraft in eine vom Förderband (2) abgehobene Montagelage verstellbar sind.

2. Fördervorrichtung nach Anspruch 1, **dadurch gekennzeichnet, dass** die Niederhalterollen (31,32) jeweils für sich aus der Gebrauchslage in die Montagelage verstellbar sind.

3. Fördervorrichtung nach Anspruch 2, **dadurch gekennzeichnet, dass** die Niederhalterollen (31,32) jeweils an einem Schwenkarm (35) gelagert sind, der an einer mit dem Gestellteil (25) verbundenen Schwenkachse (36) angeordnet ist.

4. Fördervorrichtung nach einem der Ansprüche 1 bis 3, **dadurch gekennzeichnet, dass** die Niederhalterollen (31,32) bei ihrem Verstellen zwischen der Gebrauchslage und der Montagelage eine Totpunktlage durchlaufen, so dass die Federkraft die jeweilige Niederhalterolle (31,32) sowohl in der Gebrauchslage als auch in der Montagelage hält.

5. Fördervorrichtung nach Anspruch 4, **dadurch gekennzeichnet, dass** eine die Federkraft erzeugende Federeinrichtung (34) einerseits gestellseitig und andererseits am Schwenkarm (35) abgestützt ist.

6. Fördervorrichtung nach Anspruch 5, **dadurch gekennzeichnet, dass** die Federeinrichtung (34) Längsgestalt aufweist und gestellseitig abseits der Schwenkachse (36) festgelegt ist.

7. Fördervorrichtung nach Anspruch 6, **dadurch gekennzeichnet, dass** die Federeinrichtung (34) von einer Zugfeder, zweckmäßigerweise in Gestalt einer Schraubenfeder, gebildet wird.

8. Fördervorrichtung nach Anspruch 7, **dadurch gekennzeichnet, dass** die Zugfeder (34) von ihrem gestellseitig festgelegten Ende her gesehen jenseits der Schwenkachse (36) am Schwenkarm (35) angreift.

9. Fördervorrichtung nach einem der Ansprüche 5 bis 8, **dadurch gekennzeichnet, dass** die Federeinrichtung (34) an der die jeweilige Niederhalterolle (31,32) drehbar am Schwenkarm (35) lagernden Rollenachse (37) festgelegt ist.

10. Fördervorrichtung nach Anspruch 8 oder 9, **dadurch gekennzeichnet, dass** die jeweilige Niederhalterolle (31,32) in ihrer Gebrauchslage einerseits und in ihrer Montagelage andererseits der verlängerten Verbindungslinie zwischen der gestellseitigen Befestigungsstelle (38) der Federeinrichtung (34) und der Schwenkachse (36) angeordnet ist.

11. Fördervorrichtung nach einem der Ansprüche 3 bis 10, **dadurch gekennzeichnet, dass** der Schwenkarm (35) mit zugeordneter Niederhalterolle (31,32) und die Federeinrichtung (34) an einem am Gestellteil (25) befestigten Befestigungsteil (40) angeordnet ist.

12. Fördervorrichtung nach Anspruch 11, **dadurch gekennzeichnet, dass** das Befestigungsteil (40) in Förderband-Längsrichtung verstellbar am Gestellteil (25) angeordnet ist.

13. Fördervorrichtung nach einem der Ansprüche 1 bis 12, **dadurch gekennzeichnet, dass** die Gegenhalteeinrichtung (33) von Gegenhalterollen (44) gebildet wird, die jeweils zwischen einer dem Vorlauftrum (5) zugeordneten Niederhalterolle (31) und einer dem Rücklauftrum (6) zugeordneten Niederhalterolle (32) angeordnet sind.

14. Fördervorrichtung nach Anspruch 13, **dadurch gekennzeichnet, dass** das Förderband (2) an seiner dem Zwischenraum zwischen den beiden Trumen (5,6) zugeordneten Innenseite eine dem den Gegenhalterollen (44) zugewandten Förderbandrand (10) entlang durchgehend verlaufende Führungsleiste (47) aufweist, deren dem Förderbandrand (10) abgewandte Leistenseite eine im Querschnitt gesehen keilartig schräge Leisten-Führungsfläche (48) bildet, und dass die Gegenhalterollen (44) eine umlaufende, die Leisten-Führungsfläche (48) übergreifende und an dieser anliegende Rollen-Führungsfläche (49) aufweisen.

15. Fördervorrichtung nach Anspruch 14, **dadurch gekennzeichnet, dass** die Rollen-Führungsfläche (49) im Querschnitt gesehen im wesentlichen gleich schräg wie die Leisten-Führungsfläche (48) ist.

16. Fördervorrichtung nach Anspruch 14 oder 15, **dadurch gekennzeichnet, dass** die Gegenhalterollen (44) eine Umfangsnut (50) zum Eintauchen der Führungsleiste (47) aufweisen, wobei die dem Förderbandrand (10) abgewandte erste Nutflanke (51) die Rollen-Führungsfläche (49) bildet.

17. Fördervorrichtung nach Anspruch 16, **dadurch gekennzeichnet, dass** die Führungsleiste (47) und die Umfangsnut (50) einen trapezartigen Querschnitt aufweisen.

18. Fördervorrichtung nach Anspruch 16 oder 17, **dadurch gekennzeichnet, dass** die dem Förderbandrand (10) zugewandte, die zweite Nutflanke (52) bildende Partie (53) der Gegenhalterollen (044) einen kleineren Außendurchmesser als die die erste Nutflanke (51) bildende Rollenpartie (54) aufweist.

19. Fördervorrichtung nach einem der Ansprüche 13 bis 18, **dadurch gekennzeichnet, dass** die Gegenhalterollen (44) jeweils an einem am Gestellteil (25) befestigten Halteteil (46) angeordnet sind.

20. Fördervorrichtung nach Anspruch 19, **dadurch gekennzeichnet, dass** das Halteteil (46) in Förderband-Längsrichtung verstellbar am Gestellteil (25) angeordnet ist.

21. Fördervorrichtung nach einem der Ansprüche 1 bis 20, **dadurch gekennzeichnet, dass** die Antriebseinrichtung (11) eine zwischen die beiden Bandtrume (5,6) greifende Antriebswalze (14) und eine an der der Antriebswalze (14) entgegengesetzten Außenseite des Rücklauftrums (6) angeordnete, das Rücklauftrum (6) gegen die Antriebswalze (13) haltende Gegenwalze (15) aufweist, wobei die Gegenwalze (15) an einer die Außenseite des Rücklauftrums (6) übergreifenden Trageinrichtung (17) angeordnet ist, die vom Rücklauftrum (6) weg schwenkbar mit dem Vorrichtungsgestell verbunden ist.

## Claims

1. Conveyor with a continuously running conveyor belt made up of an upper forward strand and a lower return strand, with a drive unit driving the conveyor belt and with a guide device guiding the conveyor belt at the edges and incorporating holding-down rollers arranged successively in the longitudinal direction of the conveyor belt on a section of the conveyor frame extending along the relevant conveyor belt edge, which hold the conveyor belt against a support located between the two strands, **characterised in that** the holding-down rollers (31, 32) are pressed against the conveyor belt (2) by the force of a spring device (34) in their position of use and can be transferred to a mounting position raised off the conveyor belt (2) against spring force.

2. Conveyor according to claim 1, **characterised in that** the holding-down rollers (31, 32) can be individually transferred from the position of use to the mounting position.

3. Conveyor according to claim 2, **characterised in that** each holding-down roller (31, 32) is mounted on a swivel arm (35) located on a swivel axis (36) connected to the frame section (25).

4. Conveyor according to any of claims 1 to 3, **characterised in that** the holding-down rollers (31, 32), while being transferred between their position of use and their mounting position, pass through a dead point position, so that the spring force holds each holding-down roller (31, 32) both in the position of use and in the mounting position.

5. Conveyor according to claim 4, **characterised in that** a spring device (34) generating the spring force is supported on the frame at one end and on the swivel arm (35) at the other end.

6. Conveyor according to claim 5, **characterised in that** the spring device (34) is elongated in shape and is attached on the frame side away from the swivel axis (36).

7. Conveyor according to claim 6, **characterised in that** the spring device (34) is represented by a tension spring preferably designed as a coil spring.

8. Conveyor according to claim 7, **characterised in that** the tension spring (34) acts on the swivel arm (35) beyond the swivel axis (36) if viewed from the end attached to the frame.

9. Conveyor according to any of claims 5 to 8, **characterised in that** the spring device (34) is located on the roller axis (37) pivoting each holding-down roller (31, 32) on the swivel arm (35).

10. Conveyor according to claim 8 or 9, **characterised in that** each holding-down roller (31, 32) is, in its position of use, located on one side and, in its mounting position, on the other side of the extended connecting line between the mounting point (38) for the spring device (34) on the frame and the swivel axis (36).

11. Conveyor according to any of claims 3 to 11, **characterised in that** the swivel arm (35) with the associated holding-down roller (31, 32) and the spring device (34) are located on a mounting part (40) attached to the frame section (25).

12. Conveyor according to claim 11, **characterised in that** the mounting part (40) is located on the frame section (25) and capable of adjustment in the longitudinal direction of the conveyor belt.

13. Conveyor according to any of claims 1 to 12, **characterised in that** the support (33) is made up of supporting rollers (44), each of which is located between a holding-down roller (31) assigned to the forward strand (5) and a holding-down roller (32) assigned to the return strand (6).

14. Conveyor according to claim 13, **characterised in that** the conveyor belt is provided, on its inner side associated with the gap between the two strands (5, 6), with a guide rail (47) continuously extending along the conveyor belt edge (10) facing the support rollers (44), the side remote from the conveyor belt edge (10) forming a rail guide surface (48) with an inclined wedge-type cross-section, and **in that** the support rollers (44) have a continuous roller guide surface (49) overlapping and in contact with the rail guide surface (48).

15. Conveyor according to claim 14, **characterised in that** the cross-section of the roller guide surface (49) is inclined in the same way as the rail guide surface (48).

16. Conveyor according to claim 14 or 15, **characterised in that** the support rollers (44) have a circumferential groove (50) for the guide rail (47), the first groove flank (51) remote from the conveyor belt edge (10) being the roller guide surface (49).

17. Conveyor according to claim 16, **characterised in that** the guide rail (47) and the circumferential groove (50) have a trapezoidal cross-section.

18. Conveyor according to claim 16 or 17, **characterised in that** the part (53) of the support rollers (44) which is adjacent to the conveyor belt edge (10) and forms the second groove flank (52) has a smaller external diameter than the roller part (54) forming the first groove flank (51).

19. Conveyor according to any of claims 13 to 18, **characterised in that** each support roller (44) is located on a retaining part (46) mounted on the frame section (25).

20. Conveyor according to claim 19, **characterised in that** the retaining part (46) is located on the frame section (25) and capable of adjustment in the longitudinal direction of the conveyor belt.

21. Conveyor according to any of claims 1 to 20, **characterised in that** the drive unit (11) comprises a drive roll (14) located between the two strands (5, 6) and a counter-roll (15) located on the outside of the return strand (6) opposite the drive roll (14) and holding the return strand (6) against the drive roll (13), the counter-roll (15) being located on a support (17) overlapping the outside of the return strand (6) and connected to the conveyor frame in a way to enable it to pivot away from the return strand (6).

## Revendications

1. Dispositif de transport avec une bande de transport circulant sans fin, formant un brin d'avance supérieur et un brin de retour inférieur, un dispositif d'entraînement entraînant la bande de transport et un système de guidage qui guide la bande de transport sur ses bords et comporte des galets presseurs, disposés sur une partie du bâti du dispositif et se succédant dans la direction longitudinale de la bande de transport, qui maintiennent la bande de transport contre un contre-dispositif de maintien disposé entre les deux brins, **caractérisé en ce que** les galets presseurs (31, 32) sont maintenus dans leur position d'utilisation contre la bande de transport (2), par la force d'un dispositif à ressort (34), et sont déplaçables, à l'encontre de la force de ressort, dans une position de montage soulevés de la bande de transport (2).

2. Dispositif de transport selon la revendication 1, **caractérisé en ce que** les galets presseurs (31, 32) sont déplaçables de manière indépendante, de la position d'utilisation à la position de montage.

3. Dispositif de transport selon la revendication 2, **caractérisé en ce que** les galets presseurs (31, 32) sont montés chacun sur un bras pivotant (35) qui est disposé sur un axe de pivotement (36) relié à la partie de bâti (25).

4. Dispositif de transport selon l'une des revendications 1 à 3, **caractérisé en ce que** les galets presseurs (31, 32) traversent une position de point mort dans leur déplacement entre la position d'utilisation et la position de montage, ce qui fait que la force de ressort maintient le galet presseur (31, 32) respectif aussi bien dans la position d'utilisation que dans la position de montage.

5. Dispositif de transport selon la revendication 4, **caractérisé en ce qu'**un dispositif à ressort (34), produisant la force de ressort, est soutenu d'une part côté bâti et d'autre part sur le bras pivotant (35).

6. Dispositif de transport selon la revendication 5, **caractérisé en ce que** le dispositif à ressort (34) présente une forme allongée et est fixé côté bâti à l'écart de l'axe de pivotement (36).

7. Dispositif de transport selon la revendication 6, **caractérisé en ce que** le dispositif à ressort (34) est formé par un ressort de traction, avantageusement sous la forme d'un ressort hélicoïdal.

8. Dispositif de transport selon la revendication 7, **caractérisé en ce que** le ressort de traction (34), vu depuis son extrémité fixée côté bâti, agit sur le bras pivotant (35), de l'autre côté de l'axe de pivotement (36).

9. Dispositif de transport selon l'une des revendications 5 à 8, **caractérisé en ce que** le dispositif à ressort (34) est fixé sur l'axe (37) des galets, supportant le galet presseur (31, 32) respectif de manière qu'il puisse tourner sur le bras pivotant (35).

10. Dispositif de transport selon la revendication 8 ou 9, **caractérisé en ce que** le galet presseur (31, 32) respectif d'une part dans sa position d'utilisation et d'autre part dans sa position de montage, est disposé sur la ligne de liaison prolongée entre le point de fixation (38) côté bâti du dispositif à ressort (34) et l'axe de pivotement (36).

11. Dispositif de transport selon l'une des revendications 3 à 10, **caractérisé en ce que** le bras pivotant (35) avec galet presseur (31, 32) associé et le dispositif à ressort (34) sont disposés sur une partie de fixation (40) fixée à la partie de bâti (25).

12. Dispositif de transport selon la revendication 11, **caractérisé en ce que** la partie de fixation (40) est disposée sur la partie de bâti (25), déplaçable dans la direction longitudinale de la bande de transport.

13. Dispositif de transport selon l'une des revendications 1 à 12, **caractérisé en ce que** le contre-dispositif de maintien (33) est formé par des contre-galets de maintien (44) qui sont disposés chacun entre un galet presseur (31) associé au brin d'avance (5) et un galet presseur (32) associé au brin de retour (6).

14. Dispositif de transport selon la revendication 13, **caractérisé en ce que** sur son côté intérieur associé à l'espace compris entre les deux brins (5, 6), la bande de transport (2) comporte une baguette de guidage (47) s'étendant en continu le long du bord (10) de la bande de transport tourné vers les contre-galets de maintien (44), baguette dont le côté tourné à l'opposé du bord (10) de la bande de transport forme une surface de guidage de baguette (48) oblique, de type coin en coupe transversale, et **en ce que** les contre-galets de maintien (44) présentent une surface de guidage de galet (49) périphérique, passant sur la surface de guidage de baguette (48) et s'appliquant contre celle-ci.

15. Dispositif de transport selon la revendication 14, **caractérisé en ce que** la surface de guidage de galet (49), vue en coupe transversale, est sensiblement oblique comme la surface de guidage de baguette (48).

16. Dispositif de transport selon la revendication 14 ou 15, **caractérisé en ce que** les contre-galets de maintien (44) présentent une rainure périphérique (50) pour la pénétration de la baguette de guidage (47), le premier flanc de rainure (51), tourné à l'opposé du bord (10) de la bande de transport, formant la surface de guidage de galet (49).

17. Dispositif de transport selon la revendication 16, **caractérisé en ce que** la baguette de guidage (47) et la rainure périphérique (50) présentent une section transversale trapézoïdale.

18. Dispositif de transport selon la revendication 16 ou 17, **caractérisé en ce que** la partie (53), tournée vers le bord (10) de la bande de transport et formant le deuxième flanc de rainure (52), des contre-galets de maintien (44), présente un plus petit diamètre extérieur que la partie de galet (54) formant le premier flanc de rainure (51).

19. Dispositif de transport selon l'une des revendications 13 à 18, **caractérisé en ce que** les contre-galets de maintien (44) sont disposés chacun sur une partie de maintien (46) fixée à une partie de bâti (25).

20. Dispositif de transport selon la revendication 19, **caractérisé en ce que** la partie de maintien (46) est disposée déplaçable sur la partie de bâti (25), dans la direction longitudinale de la bande de transport.

21. Dispositif de transport selon l'une des revendications 1 à 20, **caractérisé en ce que** le dispositif d'entraînement (11) comporte un cylindre d'entraînement (14) passant entre les deux brins (5, 6) de la bande et un contre-cylindre (15) disposé sur le côté extérieur, opposé au cylindre d'entraînement (14), du brin de retour (6), et maintenant le brin de retour (6) contre le cylindre d'entraînement (13), le contre-cylindre (15) étant disposé sur un dispositif de support (17) passant sur le côté extérieur du brin de retour (6) et qui est relié au bâti du dispositif, de manière à s'éloigner par pivotement du brin de retour (6).
